# FASCICULE DE BREVET EUROPEEN

(11) **EP 0 705 537 B1**
(45) Date de publication et mention de la délivrance du brevet: **03.03.1999**
(21) Numéro de dépôt: 95460036.7
(22) Date de dépôt: 29.09.1995
(51) Int. Cl.: A21B 5/03

(54) **Ustensile pour étaler une pâte alimentaire liquide sur une plaque de cuisson**
Behälter zum Auftragen von Teig auf einer Kochplatte
Utensil for spreading alimentary paste on a cooking plate

(30) Priorité: 03.10.1994 FR 9411979
(43) Date de publication de la demande: 10.04.1996
(73) Titulaire: KRAMPOUZ, 29710 Pouldreuzic (FR)
(72) Inventeur: Bosser, Michel, F-29710 Pouldreuzic (FR)
(74) Mandataire: Le Faou, Daniel

(56) Documents cités:
- FR-A- 2 688 657

## Description

La présente invention se rapporte à un ustensile pour étaler une pâte alimentaire liquide, telle que de la pâte à crêpe, sur une plaque de cuisson de forme circulaire.

On connaît une méthode traditionnelle pour étaler de la pâte à crêpe sur une plaque de cuisson circulaire qui consiste, dans un premier temps, à y déverser un volume déterminé de pâte, par exemple à l'aide d'une louche. Dans un deuxième temps, en utilisant un petit râteau sans dents, parfois dénommé "rouable", on répartit la pâte afin qu' elle recouvre uniformément toute la surface de la plaque.

Une telle opération nécessite une certaine dextérité et des gestes rapides car si la pâte n'est pas étalée suffisamment vite, elle cuit sur place. Par conséquent, la répartition de la pâte n'est pas uniforme et, dans certains cas, la totalité de la surface de la plaque n' est pas recouverte.

Ces problèmes se trouvent encore accentués lorsque l'opérateur doit étaler de la pâte à une cadence élevée, par exemple sur les différentes plaques d' une machine de fabrication de crêpes du genre manège.

La présente invention a pour but de pallier ces inconvénients. Dans cette optique, elle propose un ustensile pour étaler de la pâte, qui peut être utilisé notamment avec les plaques de cuisson traditionnelles et dont le maniement permet une répartition uniforme de la pâte, sans nécessiter une dextérité particulière de la part de l'utilisateur.

Ainsi, conformément à l'invention, cet ustensile pour étaler de la pâte alimentaire, telle que de la pâte à crêpe, sur une plaque de cuisson, consiste en un réceptacle à fond ouvert de forme allongée, dont le volume est adapté pour recevoir suffisamment de pâte pour recouvrir toute la surface de la plaque et présente en outre, entre ses deux extrémités opposées, des moyens d'espacement par rapport à la plaque, de sorte que par déplacement de l'ustensile sur la plaque transversalement - ou approximativement transversalement - par rapport à sa grande dimension, la pâte s'écoule et se déplace sur la plaque par un espace de hauteur constante le séparant de cette plaque,.

Selon un mode de réalisation préférentiel, cet ustensile est adapté pour étaler de la pâte sur une plaque de cuisson circulaire et affecte, en vue de dessus, une forme évasée depuis une première extrémité comportant des premiers moyens d'appui au centre de la plaque, jusqu'à une seconde extrémité comportant des seconds moyens d'appui assurant son guidage à la périphérie de la plaque.

Par ailleurs, selon d'autres caractéristiques avantageuses mais non limitatives de ce mode de réalisation :
- l'ustensile comporte deux flancs formant entre eux un angle aigu qui correspond à ladite première extrémité, qui se poursuivent par deux flancs sensiblement parallèles séparés l'un de l'autre par une entretoise formant la seconde extrémité, de sorte qu'il présente une forme symétrique par rapport à un axe médian longitudinal qui passe par le sommet de l'angle ;
- les moyens d'appui au centre de la plaque consistent en une pointe ;
- les seconds moyens d'appui consistent en un épaulement formant partie intégrante de chacun desdits flancs sensiblement parallèles et apte à s'appliquer contre le rebord de la plaque ;
- les moyens d'espacement sont formés d'une part par les premiers moyens d'appui au centre de la plaque et d'autre part, par une cale formée dans lesdits flancs parallèles, ceux-ci présentant la même hauteur ;
- les seconds moyens d'appui comprennent un bossage ou une rainure formé(e) dans ladite cale, apte à coopérer avec une rainure ou un bossage que présente la plaque à la périphérie ;
- l'entretoise est pourvue d'un organe de manoeuvre ;
- l'organe de manoeuvre consiste en une tige qui s'étend perpendiculairement au plan général de l'ustensile ;
- le volume dudit réceptacle correspond au volume de pâte utile pour recouvrir toute la surface de la plaque ;
- le réceptacle comporte au moins un repère visuel qui permet de doser le volume de pâte utile pour recouvrir toute la surface de la plaque.

D'autres caractéristiques et avantages de l'invention apparaîtront à la lecture de la description détaillée de certains modes de réalisation préférentiels, faite en référence aux dessins annexés dans lesquels :
- la figure 1 est une vue en perspective d'un ustensile conforme à l'invention adapté pour étaler de la pâte sur une plaque de cuisson circulaire ;
- la figure 2 est une vue de côté de l'ustensile de la figure 1, en appui sur une plaque de cuisson circulaire traditionnelle ;
- la figure 3 est une vue de côté de l'entretoise qui équipe l'ustensile ;
- la figure 4 est une vue analogue à la figure 1, destinée à expliquer comment s'effectue l'étalement de pâte au moyen de l'ustensile ;
- les figures 5 et 6 sont des vues analogues à la figure 2, montrant des variantes de réalisation de l'ustensile, la plaque de cuisson étant représentée partiellement en coupe ;
- les figures 7 et 8 sont des schémas montrant, vue de dessus, la forme générale de l'ustensile de l'invention, selon des modes de réalisation différents.

L'ustensile pour étaler la pâte, qui est représenté sur les figures annexées est formé d'un réceptacle 1 à fond ouvert 17. Il est par exemple réalisé par pliage d'une tôle métallique ou par moulage d'aluminium ou d'une matière plastique résistant à la chaleur.

Plus précisément, le réceptacle 1 a, vu de dessus, une forme allongée évasée depuis une première extrémité 12 jusqu'à une seconde extrémité 14. Il comporte deux côtés 10 et 11 formés de deux flancs verticaux 100 et 110 qui forment entre eux un angle aigu **a**, le sommet de cet angle correspondant à la première extrémité 12. Selon des formes de réalisation différentes, cet angle **a** peut être de l'ordre de 20 à 50°.

Les deux flancs 100 et 110 se poursuivent par deux autres flancs 101 et 111 sensiblement parallèles entre eux, et également sensiblement parallèles à l'axe médian longitudinal YY' qui passe par l'extrémité 12.

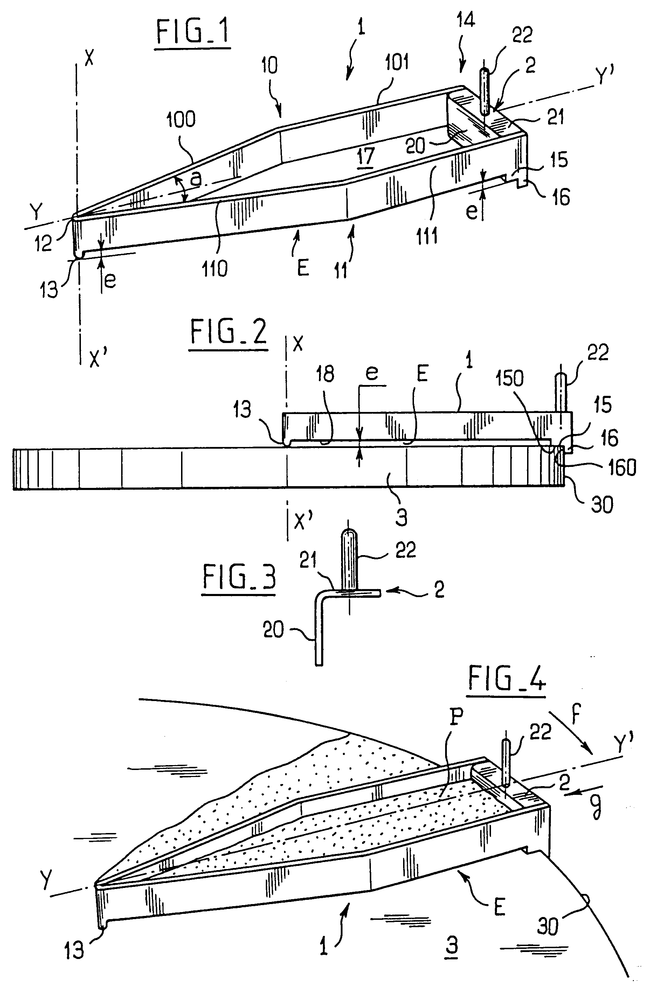

Les deux flancs 101 et 111 sont maintenus séparés par une entretoise 2, par exemple en tôle métallique pliée en "L", qui forme la seconde extrémité de l'ustensile. Comme le montre la figure 3, cette entretoise comprend une aile 20 verticale qui s'étend perpendiculairement aux flancs 101 et 111 et une aile horizontale 21 alignée avec le chant supérieur de ces flancs.

De plus, elle est pourvue d'un organe de manoeuvre 22, fixé sur son aile horizontale et qui consiste en une tige verticale. Bien entendu, cet organe de manoeuvre pourrait avoir une autre forme, par exemple courbe.

L'entretoise 2 est fixée aux flancs 101 et 111 par soudage ou par collage.

On notera que la longueur totale de l'ustensile, qui sépare l'extrémité 12 du rebord externe de l'entretoise 2, est légèrement supérieure au rayon d'une plaque de cuisson circulaire de type bien connu. On en expliquera l'intérêt plus loin dans la description.

L'extrémité 12 est pourvue, sur son chant inférieur, d' un bossage d'appui 13 au centre de la plaque de cuisson, de hauteur **e**. Celle-ci, de l'ordre de 0,5 à 1 mm, a été exagérée sur les figures. Le bossage est de préférence formé d'un prolongement de la matière qui constitue les côtés de l'ustensile.

Dans l'extrémité libre des flancs 101 et 111 est formée une cale 15 qui constitue un décrochement par rapport au chant inférieur de ces flancs.

La cale présente un rebord inférieur horizontal 150 destiné à venir en appui contre la surface de la plaque chauffante. Elle comporte elle-même un épaulement de guidage 16 dirigé vers le bas, dont le rebord vertical interne 160 est destiné à venir en appui contre le rebord circulaire de la plaque de cuisson.

Le rebord inférieur de l'aile 20 de l'entretoise 2 coïncide avec le rebord inférieur horizontal 150 de la cale 15.

On notera que la hauteur de la cale 15 est égale à celle du bossage d'appui 13 et que ceux-ci forment des moyens d'espacement de l'ustensile par rapport à la plaque.

L'ustensile s'utilise de la manière suivante.

Après avoir fait chauffer une plaque de cuisson circulaire 3 de type connu, on positionne l'ustensile de telle manière que les épaulements 16 s'appliquent contre le rebord 30 de la plaque.

Simultanément, le bossage 13 se positionne au centre de la plaque.

A l'aide d'une louche, on verse dans le réceptacle la dose de pâte nécessaire pour recouvrir toute la surface de la plaque.

De préférence, on utilisera une louche apte à contenir juste la dose de pâte voulue.

Le volume du réceptacle peut être prévu pour correspondre juste au volume de pâte utile pour recouvrir toute la surface de la plaque. Dans une autre forme de réalisation, le réceptacle peut comporter un repère visuel permettant de doser comme il se doit, la quantité de pâte.

On fait alors tourner l'ustensile autour de l'axe XX' de la plaque, en le manoeuvrant dans un sens quelconque tel que le sens de la flèche **f** (figure 3), tout en maintenant un effort dirigé dans le sens de la flèche **g** pour plaquer l'épaulement 16 contre le rebord 30 de la plaque.

Le mouvement s'effectue donc tangentiellement c'est-à-dire sensiblement transversalement, par rapport à la plus grande dimension de l'ustensile, qui s'étend radialement.

Ce mouvement devra être le plus régulier possible.

Du fait de l'existence du bossage 13 et de la cale 15, le rebord inférieur du réceptacle 1 est distant de la plaque 3 d'une hauteur **e**. La pâte s'écoule par cet interstice ou espace **E** tandis que ses flancs font office de lame étaleuse. Il se forme donc sur la plaque de cuisson une couche de pâte d'épaisseur bien calibrée **e**.

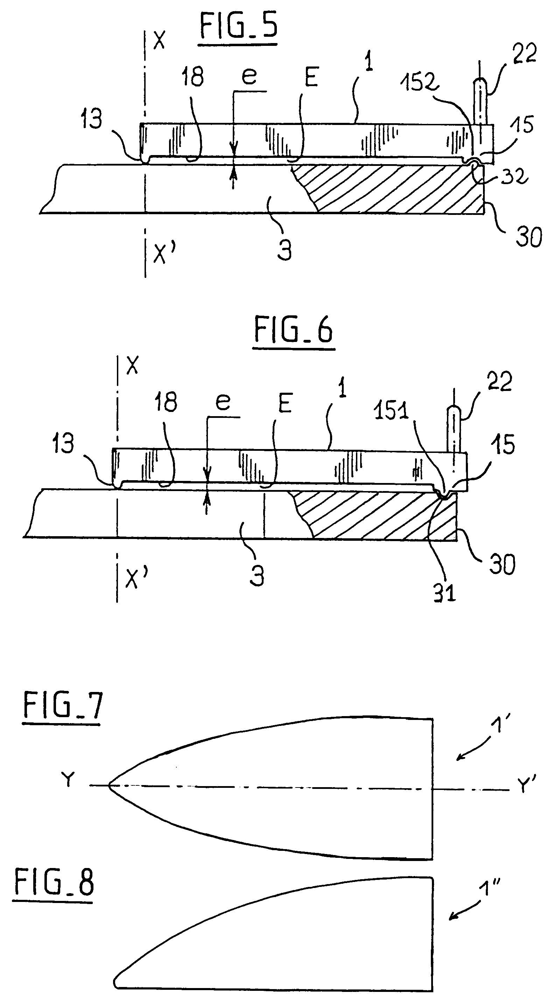

Dans la variante de réalisation de la figure 5, l'ustensile 1 est dépourvu d'épaulements 16. Par contre, dans chacun des talons 15 est prévue une petite découpure 152 apte à venir coiffer une nervure circulaire 32 située en périphérie de la plaque 3.

Dans la forme de réalisation de la figure 6, ce sont les talons 15 qui sont pourvus d'un bossage 151 qui coopère avec une rainure circulaire 31 prévue à la périphérie de la plaque 3.

Toutefois, dans ces deux modes de réalisation, l'ustensile peut être équipé de moyens de guidage additionnels, tels que les épaulements 16.

La forme particulière de l'ustensile s'explique par le fait que la quantité de pâte nécessaire pour recouvrir la surface de la plaque proche de son centre, est nécessairement inférieure à celle qui est requise pour recouvrir sa périphérie. Pour cette raison, l'ustensile a une forme évasée.

Dans une autre forme de réalisation, il pourrait avoir une forme sensiblement triangulaire.

Comme le montre la figure 7, l'ustensile 1' affecte, vu de dessus, la forme générale d' une semelle de fer à repasser, dont les côtés arqués sont disposés symétriquement par rapport à l'axe **YY'**.

Dans la forme de la figure 8, l'ustensile 1" comporte un côté arqué tandis que le bord opposé est rectiligne.

Dans ce qui précède, on comprend que le maniement relativement simple de l'ustensile fait qu'il peut être utilisé par quiconque, sans nécessiter d'entraînement ou de tour de main particulier. Sa forme symétrique rend son utilisation possible, aussi bien par des gauchers que des droitiers. Il peut subir une rotation dans le sens des aiguilles d' une montre ou dans le sens contraire.

Enfin, dans une forme de réalisation où l'ustensile est destiné à étaler de la pâte sur une plaque rectangulaire, celui-ci affecte en vue de dessus une forme également rectangulaire allongée dont les grands côtés ont une longueur sensiblement égale à celle des petits côtés de la plaque.

Cet ustensile est obtenu par pliage en forme de "U" d' une bande de tôle, dont l'extrémité ouverte est refermée par une entretoise du même type que l'entretoise 2 décrite plus haut. Cette extrémité est similaire à celle se trouvant sur la droite des figures pour l'ustensile représenté sur les dessins annexés.

A l'extrémité opposée, correspondant au fond du "U", la bande a une largeur plus grande que ses flancs, et forme donc une saillie, venant en appui (comme le bossage 13 de l'ustensile décrit) contre la plaque de cuisson. Bien entendu, cette saillie a la même hauteur que les cales de l'entretoise située à l'autre extrémité.

L'ustensile est positionné sur la plaque rectangulaire de telle manière que les épaulements viennent en butée contre l'un des grands côtés de la plaque. La saillie située à l'extrémité opposée de l'ustensile vient en appui sur la surface de la plaque à proximité du second grand côté.

Après avoir rempli le réceptable de pâte, l'opérateur déplace l'ustensile selon une direction transversale par rapport à sa plus grande dimension (perpendiculairement aux grands côtés de l'ustensile rectangulaire). La pâte est donc étalée selon une couche en forme de bande rectangulaire d'épaisseur constante.

## Revendications

1. Ustensile pour étaler de la pâte alimentaire liquide (P), telle que de la pâte à crêpe, sur une plaque de cuisson (3), qui consiste en un réceptacle (1, 1', 1") à fond ouvert (17) de forme allongée, dont le volume est adapté pour recevoir suffisamment de pâte (P) pour recouvrir toute la surface de la plaque (3) et présente en outre, entre ses deux extrémités opposées (12, 14), des moyens d'espacement (13, 15) par rapport à la plaque, de sorte que par déplacement de l'ustensile sur la plaque (3) transversalement - ou approximativement transversalement - par rapport à sa grande dimension, la pâte (P) s'écoule et se dépose sur la plaque (3) par un espace (E) de hauteur constante le séparant de cette plaque (3).

2. Ustensile selon la revendication 1, pour étaler de la pâte sur une plaque de cuisson circulaire, caractérisé en ce qu'il affecte, en vue de dessus, une forme évasée depuis une première extrémité (12) comportant des premiers moyens d'appui (13) au centre de la plaque (3), jusqu'à une seconde extrémité (14) comportant des seconds moyens d'appui (16) assurant son guidage à la périphérie de la plaque.

3. Ustensile selon la revendication 2, caractérisé en ce qu'il comporte deux flancs (100, 110) formant entre eux un angle aigu (a) qui correspond à ladite première extrémité (12), qui se poursuivent par deux flancs sensiblement parallèles (101, 111) séparés l'un de l'autre par une entretoise (2) formant la seconde extrémité (14), de sorte qu' il présente une forme symétrique par rapport à un axe médian longitudinal (YY') qui passe par le sommet de l'angle (a).

4. Ustensile selon la revendication 2 ou 3, caractérisé en ce que lesdits moyens d'appui au centre de la plaque consistent en un bossage (13).

5. Ustensile selon la revendication 3 ou 4, caractérisé en ce que lesdits seconds moyens d'appui consistent en un épaulement (16) formant partie intégrante de chacun desdits flancs sensiblement parallèles (101, 111) et apte à s'appliquer contre le rebord (30) de la plaque (3).

6. Ustensile selon l'une des revendications 3 à 5, caractérisé en ce que lesdits moyens d'espacement sont formés d'une part par les premiers moyens d'appui (13) au centre de la plaque (3) et d'autre part, par une cale (15) formée dans lesdits flancs parallèles (101, 111), ceux-ci présentant la même hauteur (e).

7. Ustensile selon l'une des revendications 4 à 6, caractérisé en ce que lesdits seconds moyens d'appui comprennent un bossage (151) ou une rainure (152) formé(e) dans ladite cale (15), apte à coopérer avec une rainure (31) ou un bossage (32) que présente la plaque (3) à sa périphérie.

8. Ustensile selon l'une des revendications 3 à 7, caractérisé en ce que ladite entretoise (2) est pourvue d'un organe de manoeuvre (22).

9. Ustensile selon la revendication 8, caractérisé en ce que ledit organe de manoeuvre consiste en une tige (22) qui s'étend perpendiculairement au plan général de l'ustensile.

10. Ustensile selon l'une des revendications 1 à 9, caractérisé en ce que le volume dudit réceptacle (1, 1', 1") correspond au volume de pâte utile pour recouvrir toute la surface de la plaque (3).

11. Ustensile selon l'une des revendications 1 à 9, caractérisé en ce que ledit réceptacle (1, 1', 1") comporte au moins un repère visuel qui permet de doser le volume de pâte utile pour recouvrir toute la surface de la plaque (3).

## Claims

1. Utensil for spreading a batter (P), such as pancake batter, on a hotplate (3), that consists of an elongate open-bottomed (17) container (1, 1', 1''), the volume of which is such that it can hold sufficient batter (P) to cover the entire surface of the hotplate (3) and possesses in addition, between its two opposite ends (12, 14), spacer means (13, 15) for holding it off the hotplate, so that as the utensil is moved sideways - or approximately sideways - relative to its largest dimension, over the hotplate (3), the batter (P) flows out and is deposited on the hotplate (3) through a clearance (E) of constant height separating it from this hotplate (3).

2. Utensil according to Claim 1, for spreading batter on a circular hotplate, characterized in that, viewed from above, it widens out from a first end (12), which has first means (13) for supporting it in the centre of the hotplate (3), to a second end (14) which has second supporting means (16) for guiding it around the perimeter of the hotplate.

3. Utensil according to Claim 2, characterized in that it comprises two side walls (100, 110) forming between themselves an acute angle (a) corresponding to the said first end (12), which are continued by two approximately parallel side walls (101, 111) separated from each other by a cross piece (2) forming the second end (14), in such a way that it has a symmetrical shape about a longitudinal central axis (YY') passing through the apex of the angle (a).

4. Utensil according to Claim 2 or 3, characterized in that the said means of supporting it in the centre of the hotplate consist of a projection (13).

5. Utensil according to Claim 3 or 4, characterized in that the said second supporting means consist of a shoulder (16) that forms an integral part of each of the said approximately parallel side walls (101, 111) and fits conveniently against the edge (30) of the hotplate (3).

6. Utensil according to one of Claims 3 to 5, characterized in that the said spacer means are formed on the one hand by the first means (13) for supporting it in the centre of the hotplate (3), and on the other by a step (15) formed in the said parallel side walls (101, 111), which latter are of the same height (e).

7. Utensil according to one of Claims 4 to 6, characterized in that the said second supporting means comprise a projection (151) or a groove (152) formed in the said step (15) so as to engage with a groove (31) or a projection (32) formed on the hotplate (3) around its perimeter.

8. Utensil according to one of Claims 3 to 7, characterized in that the said cross piece (2) is provided with a member (22) for operating the utensil.

9. Utensil according to Claim 8, characterized in that the said operating member consists of a pin (22) that extends perpendicularly to the general plane of the utensil.

10. Utensil according to one of Claims 1 to 9, characterized in that the volume of the said container (1, 1', 1'') corresponds to the volume of batter required to cover the entire surface of the hotplate (3).

11. Utensil according to one of Claims 1 to 9, characterized in that the said container (1, 1', 1'') includes at least one visual marker for measuring out the volume of batter required to cover the entire surface of the hotplate (3).

## Patentansprüche

1. Gerät für das Auftragen von flüssigem Teig (P), wie zum Beispiel einem Pfannkuchenteig auf einer Kochplatte (3), welches aus einem länglichen Behälter (1, 1', 1'') mit offenem Boden (17) besteht, der ein ausreichendes Volumen hat, um eine Teigmenge (P) aufzunehmen, mit der die gesamte Fläche der Kochplatte (3) bedeckt werden kann, und außerdem zwischen seinen gegenüberliegenden Enden (12, 14) Mittel (13, 15) für die Herstellung eines Abstandes gegenüber der Kochplatte aufweist, so daß durch Verschieben des Gerätes auf der Kochplatte (3) in Querrichtung - oder weitgehend in Querrichtung - gegenüber ihrer großen Abmessung der Teig (P) verläuft und sich auf der Kochplatte (3) in einem Abstand (E) mit konstanter Höhe absetzt, der ihn von dieser Kochplatte (3) trennt.

2. Gerät nach Anspruch 1 für das Auftragen eines Teiges auf einer runden Kochplatte,
**dadurch gekennzeichnet**, **daß**
es von oben gesehen ab einem ersten Endabschnitt (12) eine aufgeweitete Form, welche erste Auflagemittel (13) in der Mitte der Kochplatte (3) enthält, bis zu einem zweiten Ende (14) besitzt, welches zweite Auflagemittel (16) für seine Führung am Umfang der Kochplatte aufweist.

3. Gerät nach Anspruch 2,
**dadurch gekennzeichnet**, **daß**
es zwei Flanken (100, 110) aufweist, welche untereinander einen spitzen Winkel (a) bilden, der dem ersten Endabschnitt (12) entspricht, und diese Flanken (100, 110) durch zwei parallele Flanken (101, 111) verlängert werden, welche durch ein Abstandsstück (2), das den zweiten Endabschnitt (14) bildet, so voneinander getrennt sind, daß eine symmetrische Anordnung gegenüber einer zentralen Mittelachse (YY') hergestellt wird, welche durch den Scheitel des Winkels (a) verläuft.

4. Gerät nach einem der Ansprüche 2 oder 3,
**dadurch gekennzeichnet**, **daß**
die in der Mitte der Kochplatte angeordneten Auflagemittel aus einem Wulst (13) bestehen.

5. Gerät nach einem der Ansprüche 3 oder 4,
**dadurch gekennzeichnet**, **daß**
die zweiten Auflagemittel aus einem Ansatz (16) bestehen, welcher einen integralen Teil der weitgehend parallelen Flanken (101, 111) bildet und am Rand der Kochplatte (3) zur Anlage kommt.

6. Gerät nach einem der Ansprüche 3 bis 5,
**dadurch gekennzeichnet**, **daß**
die Abstandsmittel einerseits durch die ersten Auflagemittel (13) in der Mitte der Kochplatte (3) und andererseits durch einen Keil (15) gebildet werden, der in den parallelen Flanken (101, 111) ausgebildet ist, wobei diese die gleiche Höhe (e) haben.

7. Gerät nach einem der Ansprüche 4 bis 6,
**dadurch gekennzeichnet**, **daß**
die zweiten Auflagemittel einen Wulst (151) oder eine Einkerbung (152) aufweisen, welche in dem Keil (15) ausgebildet sind und mit einer Einkerbung (31) oder einem Wulst (32) zusammenwirken, welche am Umfang der Kochplatte (3) angeordnet sind.

8. Gerät nach einem der Ansprüche 3 bis 7,
**dadurch gekennzeichnet**, **daß**
das Abstandsstück (2) mit einem Betätigungsorgan (22) ausgestattet ist.

9. Gerät nach Anspruch 8,
**dadurch gekennzeichnet**, **daß**
das Betätigungsorgan aus einem Stiel (22) besteht, welcher rechtwinklig zu der allgemeinen Ebene des Gerätes verläuft.

10. Gerät nach einem der Ansprüche 1 bis 9,
**dadurch gekennzeichnet**, **daß**
das Volumen des Behälters (1, 1', 1'') dem Nutzvolumen des Teiges entspricht, das notwendig ist, um die gesamte Fläche der Kochplatte (3) zu überdecken.

11. Gerät nach einem der Ansprüche 1 bis 9,
**dadurch gekennzeichnet**, **daß**
der Behälter (1, 1', 1'') mindestens eine visuelle Markierung aufweist, die es erlaubt, das Nutzvolumen des Teigs zu dosieren, welches notwendig ist, um die gesamte Fläche der Kochplatte (3) zu überdecken.
